# EUROPÄISCHE PATENTSCHRIFT

(11) **EP 1 692 000 B1**
(45) Veröffentlichungstag und Bekanntmachung des Hinweises auf die Patenterteilung: **08.08.2012**
(21) Anmeldenummer: 04802839.3
(22) Anmeldetag: 27.11.2004
(51) Int. Cl.: B60J 7/12

(54) **CABRIOLET-FAHRZEUG MIT VERDECK-STÜTZGURT**
CABRIOLET VEHICLE WITH COVER SUPPORT STRAP
VEHICULE CABRIOLET A SANGLE SUPPORT DE CAPOTE

(30) Priorität: 06.12.2003 DE 10357101
(43) Veröffentlichungstag der Anmeldung: 23.08.2006
(73) Patentinhaber: Wilhelm Karmann GmbH, 49084 Osnabrück (DE)
(72) Erfinder: SCHONHORST, Heiko, 49492 Westerkappeln (DE); LICHER, Klaus, 49124 Georgsmarienhütte (DE)
(74) Vertreter: Kronthaler, Schmidt & Coll.
(86) Internationale Anmeldenummer: PCT/DE2004/002630
(87) Internationale Veröffentlichungsnummer: WO 2005/056324

(56) Entgegenhaltungen:
- DE-C1- 3 907 228
- DE-C1- 3 907 229
- US-A- 5 887 936

## Beschreibung

Die Erfindung betrifft ein bewegliches Dach für ein Cabriolet-Fahrzeug mit einem flexiblen Bezug nach dem Oberbegriff des Anspruchs 1.

Es ist bekannt, bei beweglichen Dächern für Cabriolet-Fahrzeuge mit flexiblen Dachbezügen, etwa solchen aus textilen Materialien oder Kunststoffen, Gurte vorzusehen, die den Dachbezug untergreifen und ihn somit bei der Dachöffnung in der gewünschten Faltungsart unterstützen können. Derartige Gurte können an Gestängeteilen des Daches befestigt sein und sich beispielsweise von einem hinteren Spannbügel zu einem vorderen Querträger des Daches, der sogenannten Dachspitze, erstrecken. In bisherigen Lösungen sind die Gurte an ihren Enden mit den jeweiligen Dachgestängeteilen verschraubt. Dabei durchgreift oder durchgreifen die Schraube(n) den Gurt, der ähnlich wie ein Sicherheitsgurt eine Faserstruktur zur Wahrung einer hohen und dauerhaften Zugfestigkeit aufweist. Mit der durchgreifenden Schraube tritt jedoch eine Beschädigung dieser Struktur ein, so daß an der Schraubbefestigung das Material ausfransen kann und geschwächt ist.

Die DE 39 07 229 C betrifft eine partielle Aussteifung eines Faltverdecks. Dabei ist ein Stützgurt offenbart, der an einem mit einem Dachgestänge verbundenen Haltebügel festgelegt wird. Ein Ende des Stützgurtes wird durch den Haltebügel gesteckt, umgeschlagen und mit dem Stützgurt vernäht.

In der US 5,887,936 A ist eine Alternative zur Befestigung eines Stützgurtes beschrieben, bei der der Stützgurt mit dem Dachgestänge vernietet wird.

Der Erfindung liegt das Problem zugrunde, die Gurtfestlegung an dachseitigen Gestängeteilen zu verbessern.

Die Erfindung löst dieses Problem durch ein bewegliches Dach für ein Cabriolet-Fahrzeug mit den Merkmalen des Anspruchs 1 sowie durch ein Cabriolet-Fahrzeug mit den Merkmalen des Anspruchs 9. Hinsichtlich weiterer vorteilhafter Ausgestaltungen der Erfindung wird auf die Ansprüche 2 bis 8 verwiesen.

Mit der Erfindung braucht zu seiner Festlegung an einem Dachgestängeteil der Gurt nicht durchbohrt und beschädigt zu werden. Durch die Endverdickung ist ein zuverlässiger Widerstand gegen ein Zurückziehen des Gurtes durch die Schlitzausnehmung gegeben.

Die Endverdickung erstreckt sich vorteilhaft über die gesamte Gurtbreite und liegt damit bei Eintrag einer Zugkraft insgesamt an der Schlitzausnehmung an.

Ein sehr effizientes und einfaches Widerlager ist dann erreicht, wenn die Endverdickung durch einen Keder gebildet ist.

Insbesondere kann an zumindest einem Endbereich der Schlitzausnehmung eine Erweiterung vorgesehen sein, so daß dort der Keder oder dergleichen Endverdickung senkrecht zur haltenden Stellung nach der Montage durchgeführt werden kann. Damit nach der Montage durchgeführt werden kann. Damit ist der Gurt auch im entspannten Zustand einfach wieder lösbar, etwa wenn eine (Teil-) Erneuerung des Daches vorgenommen werden soll.

Wenn dabei die Verbreiterung nur wenig größer dimensioniert ist als der Durchmesser der Endverdickung, ist hingegen ein unbeabsichtigtes Lösen, etwa auch durch unsachgemäß agierende Insassen, zuverlässig vermieden, was insbesondere bei ungefütterten Verdecken, wenn die Gurte vom Innenraum aus zugänglich sind, Bedeutung erlangt.

Vorteilhaft sind zwei Gurte vorgesehen, die zumindest an der Dachspitze in der erfindungsgemäßen Weise festgelegt sein können.

Weitere Vorteile und Merkmale der Erfindung ergeben sich aus einem in der Zeichnung zumindest schematisch dargestellten und nachfolgend beschriebenen Ausführungsbeispiel des Gegenstandes der Erfindung.

In der Zeichnung zeigt:
- Fig. 1: ein erfindungsgemäßes Kraftfahrzeug in perspektivischer Ansicht von schräg hinten mit einem vollständig geschlossenen Dach,
- Fig. 2: eine Ansicht auf einen Randbereich der Dachspitze mit daran festgelegtem Gurt, etwa entsprechend dem Detail II in Fig. 1, der besseren Übersicht halber ohne Bezug dargestellt,
- Fig. 3: einen Schnitt entlang der Linie III-III in Fig. 2.

In den Zeichnungsfiguren ist generell ein zweisitziges Fahrzeug 1 nach Art eines Roadsters dargestellt. Dies ist nicht zwingend. Auch beispielsweise ein mit einer Rückbank versehenes vier- oder fünfsitziges Cabriolet-Fahrzeug kann erfindungsgemäß ausgebildet sein.

Das Fahrzeug 1 umfaßt in seinem oberen Bereich und an einen Windschutzscheibenrahmen 2 mittelbar oder unmittelbar angrenzend ein bewegliches Dach 3, das eine Heckscheibe 4 und außerhalb dieser einen flexiblen Dachbezug 5 umfaßt, der etwa textil oder aus Kunststoff ausgebildet sein kann. Dieser kann über ein Dachgestänge mit einem oder mehreren Querspriegeln (nicht einzeln dargestellt) gelegt und an diesen festgelegt sein.

Der Bezug 5 erstreckt sich hier außerhalb einer Heckscheibe 4 über das gesamte Dach 3, was nicht zwingend ist. Es kann auch nur ein Teilbereich des Daches 3 mit einem flexiblen Bezug 5 und ein anderer etwa mit starren Plattenteilen versehen sein.

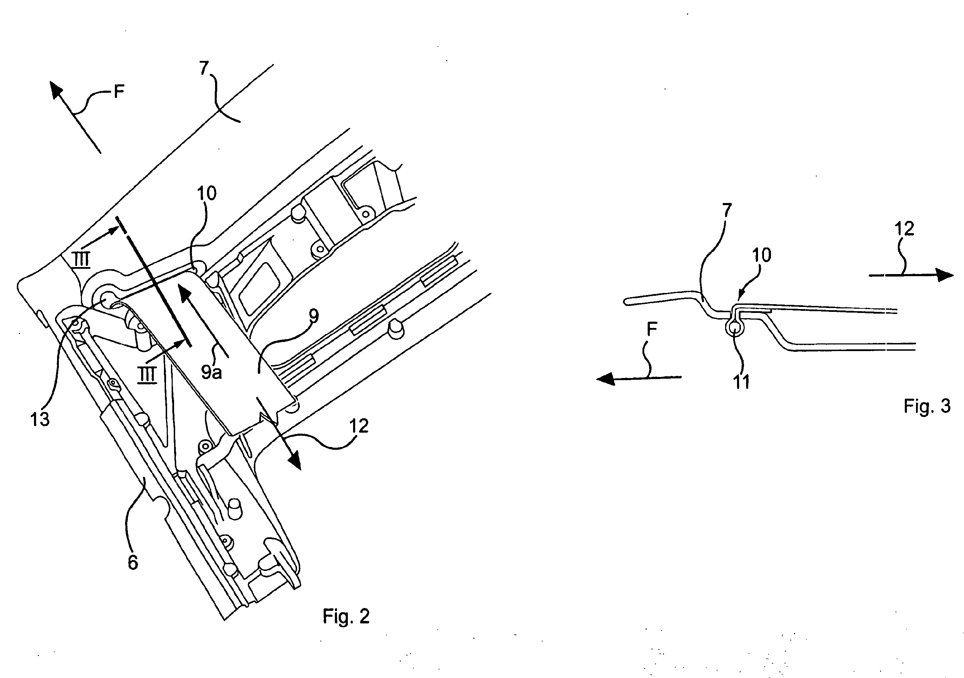

Vom Dachgestänge ist in Fig. 2 lediglich ein vorderer Endbereich eines seitlichen Rahmenteils 6 und das bezüglich der Fahrtrichtung F linke Ende einer die Dachspitze 7 bildenden Querträgerstruktur dargestellt.

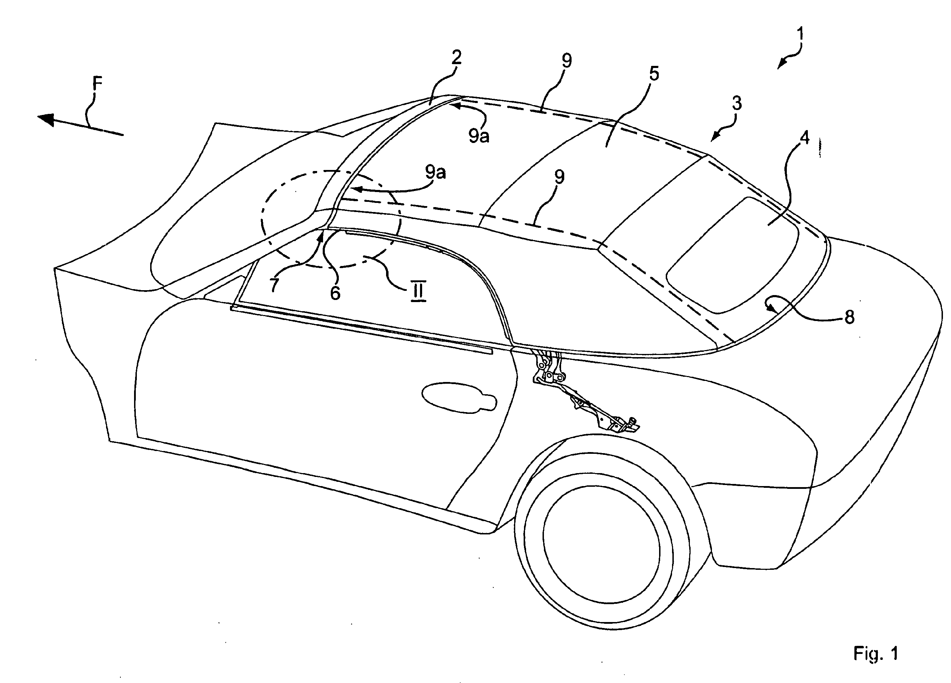

Der Dachbezug 5 kann beispielsweise zwischen dieser Dachspitze 7 und einem hinteren Spannbügel 8 unterhalb der Heckscheibe 4 gespannt werden (Fig. 1). Der Spannbügel 8 liegt hier bei geschlossenem Dach 3 auf einem Deckelteil der Karosserie auf. Anstelle des Spannbügels 8 ist bei einer anderen Faltungsart auch eine direkte Karosserieanbindung des hinteren Endes des Bezugs 5 möglich. Ebenso kann eine gänzlich abweichende Dachform, etwa mit zwei heckwärts auslaufenden seitlichen Spitzen, sogenannten Finnen, vorgesehen sein, denen eine Heckscheibe vorgeordnet ist.

Um eine glatte und definierte Lage des Dachbezugs 5 im geöffneten Zustand zu erreichen und im geschlossenen Zustand dessen Spannung zu begrenzen, ist dieser hier von zwei zumindest im wesentlichen in Fahrzeuglängsrichtung verlaufenden Gurten 9 untergriffen, die in Fig. 1 gestrichelt angedeutet sind. Diese Gurte 9 durchgreifen mit ihren vorderen Enden 9a Schlitzausnehmungen 10 der Dachspitze 7, wobei im Ausführungsbeispiel der Eingriff von oben erfolgt, was je nach Ausbildung der Dachspitze 7 nicht zwingend ist. Jenseits der Verlaufsebene des Gurtes 9, die hier oberhalb der Dachspitze 7 liegt, ist eine Endverdickung 11 vorgesehen, die ein Zurückziehen des so gehaltenen Gurtendes 9a durch die Schlitzausnehmung 10 verhindert.

Die Schlitzausnehmung 10 ist im wesentlichen quer zur Fahrtrichtung F erstreckt, wobei hier eine leichte Schrägstellung derart vorgesehen ist, daß der Schlitz 10 in Zugrichtung 12 des Gurtes 9 von einer seitlichen Erweiterung 13 weg mit einer Komponente in diese Zugrichtung 12, also entgegen der Fahrtrichtung F, läuft. Der Gurt 9 wird also bei Zugeinwirkung 12 von der Erweiterung 13 weg in die Schlitzausnehmung 10 gezogen und somit zusätzlich gesichert.

Die Erweiterung 13 zeigt im wesentlichen eine runde Umrißgestalt, deren Durchmesser den der Endverdickung 11 nur wenig überragt, so daß deren ungewolltes Durchfädeln durch die Verbreiterung 13 verhindert ist.

Zur Montage des Gurtes 9 wird dieser im zugfreien Zustand mit seiner Endverdickung 11 durch die Verbreiterung 13 eingefädelt. Die Endverdickung 11 wird dann parallel vor die im Vergleich zur Endverdickung 11 schmale Schlitzausnehmung 10 gelegt und kann aufgrund dieser Zwangssicherung mit Zug in Richtung des Pfeils 12 belastet werden.

Die Endverdickung 11 ist hier durch eine Schlaufe des Gurtendes 9a mit einem innenliegenden Keder gebildet (Fig. 3), wobei die Teile der Schlaufe etwa durch Kleben, Schweißen, Schweißkleben und/oder Vernähen aneinander gehalten sind. Das Gurtende 9a ist im montierten Zustand allein durch die Schlitzausnehmung 10 gesichert, eine zusätzliche Halterung, etwa durch Verschrauben oder Vernieten, ist vollständig entbehrlich. Das Gurtband kann daher ohne mechanische Beschädigungen, insbesondere Bohrungen, bleiben, was seine Langlebigkeit verbessert und auch eine Demontage und Wiedermontage ermöglicht.

Auch das hintere Gurtende kann in gleicher Weise an einem weiteren Gestängeteil, etwa dem hinteren Spannbügel 8, gesichert sein.

Die Erfindung ist sowohl bei Fahrzeugen mit manuell zu bewegendem Dach 3 als auch bei dessen voll- oder teilautomatischer Beweglichkeit anwendbar.

Es ist dabei nicht zwingend, daß die Gurte 9 den Bezug 5 auf seiner ganzen Länge unterlaufen. Auch nur über Teilbereiche erstreckte Gurte sind möglich.

## Patentansprüche

1. Bewegliches Dach für ein Cabriolet-Fahrzeug (1) mit einem flexiblen Bezug (5), wobei der Bezug (5) von zumindest einem bei geschlossenem Dach (3) im wesentlichen dem Verlauf der Dachform folgenden Gurt (9) untergriffen ist, der an, in montierter Position des Daches quer zu einer Fahrtrichtung (F) angeordneten Gestängeteilen (7;8) gehalten ist,
**dadurch gekennzeichnet,**
**daß** zumindest ein Ende (9a) des Gurtes (9) eine Schlitzausnehmung (10) des Dachgestänges (7;8) durchgreift und gegen ein Zurückziehen aus dieser durch eine Endverdickung (11) gesichert ist.

2. Bewegliches Dach nach Anspruch 1
**dadurch gekennzeichnet,**
**daß** die Endverdickung (11) durch eine umgenähte, einen Keder umfassende Schlaufe des Gurtes (9) gebildet ist.

3. Bewegliches Dach nach einem der Ansprüche 1 oder 2,
**dadurch gekennzeichnet,**
**daß** zumindest eine Schlitzausnehmung (10) in einem vorderen Querträger des Daches (3), der sogenannten Dachspitze (7), angeordnet ist.

4. Bewegliches Dach nach einem der Ansprüche 1 bis 3,
**dadurch gekennzeichnet,**
**daß** eine Schlitzausnehmung (10) an einem Ende eine Verbreiterung (13) zum Durchführen der Endverdickung (11) aufweist.

5. Bewegliches Dach nach Anspruch 4,
**dadurch gekennzeichnet,**
**daß** die Verbreiterung (13) eine im wesentlichen runde Umrißgestalt mit einem Durchmesser, der nur geringfügig über dem der Endverdickung (11) liegt, aufweist.

6. Bewegliches Dach nach einem der Ansprüche 1 bis 5,
**dadurch gekennzeichnet,**
**daß** jeder Fahrzeugseite ein Gurt (9) zugeordnet ist.

7. Bewegliches Dach nach einem der Ansprüche 1 bis 6,
**dadurch gekennzeichnet,**
**daß** der oder jeder Gurt (9) frei von Durchbohrungen ist.

8. Bewegliches Dach nach einem der Ansprüche 1 bis 7,
**dadurch gekennzeichnet,**
**daß** ein vorderes und ein hinteres Gurtende (9a) gleichartig an unterschiedlichen Gestängeteilen (7;8) des Daches (3) befestigt sind.

9. Cabriolet-Fahrzeug (1) mit einem beweglichen Dach (3) nach einem der Ansprüche 1 bis 8.

## Claims

1. A movable roof for a convertible vehicle (1) with a flexible cover (5), said cover (5) being supported underneath by at least one belt (9) which substantially follows the contour of the roof when the roof (3) is closed and which is held, in the mounted position of the roof, by linkage members (7; 8) arranged transverse to a direction of travel (F),
**characterised in that**
at least one end (9a) of the belt (9) extends through a slot-shaped recess (10) of the roof linkage (7; 8) and is prevented from retracting from the recess (10) by a thickened end (11).

2. The movable roof according to claim 1, **characterised in that** the thickened end (11) is formed by a seamed loop of the belt (9) which comprises a welt.

3. The movable roof according to any one of claims 1 or 2, **characterised in that** at least one slot-shaped recess (10) is arranged in a front cross beam of the roof (3), referred to as the roof tip (7).

4. The movable roof according to any one of claims 1 to 3, **characterised in that** a slot-shaped recess (10) comprises a widened section (13) at one end for the thickened end (11) to pass through.

5. The movable roof according to claim 4, **characterised in that** the widened section (13) has a substantially round contour with a just slightly greater diameter than the thickened end (11).

6. The movable roof according to any one of claims 1 to 5, **characterised in that** each vehicle side has one belt (9) associated with it.

7. The movable roof according to any one of claims 1 to 6, **characterised in that** the or each belt (9) is free from through-bores.

8. The movable roof according to any one of claims 1 to 7, **characterised in that** front and rear belt ends (9a) are fixed to different linkage members (7; 8) of the roof (3) in a similar manner.

9. A convertible vehicle (1) with a movable roof (3) according to any one of claims 1 to 8.

## Revendications

1. Toit déplaçable pour un véhicule cabriolet (1), ledit toit comprenant une enveloppe flexible (5) qui est supportée d'en bas par au moins une ceinture (9) suivant sensiblement le contour du toit (3) en état fermé, cette ceinture (9) étant tenue, lorsque le toit est en position montée, sur des pièces de tringlerie (7; 8) disposées transversalement par rapport à une direction de marche (F), **caractérisé en ce qu'**au moins une extrémité (9a) de la ceinture (9) passe à travers d'un évidement en forme de fente (10) de la tringlerie (7; 8) du toit et est empêchée de se retirer dudit évidement (10) par un épaississement d'extrémité (11).

2. Toit déplaçable selon la revendication 1, **caractérisé en ce que** l'épaississement d'extrémité (11) est constitué d'une boucle bordée de la ceinture (9) comprenant un bourrelet.

3. Toit déplaçable selon l'une quelconque des revendications 1 ou 2, **caractérisé en ce qu'**au moins un évidement en forme de fente (10) est disposé dans une traverse avant du toit (3), appelée le sommet de toit (7).

4. Toit déplaçable selon l'une quelconque des revendications 1 à 3, **caractérisé en ce qu'**un évidement en forme de fente (10) comprend à une extrémité un élargissement (13) pour le passage de l'épaississement d'extrémité (11).

5. Toit déplaçable selon la revendication 4, **caractérisé en ce que** l'élargissement (13) présente un contour sensiblement rond avec un diamètre seulement un peu supérieur à celui-ci de l'épaississement d'extrémité (11).

6. Toit déplaçable selon l'une quelconque des revendications 1 à 5, **caractérisé en ce qu'**une ceinture (9) est associée à chaque côté du véhicule.

7. Toit déplaçable selon l'une quelconque des revendications 1 à 6, **caractérisé en ce que** la ou chaque ceinture (9) est réalisée sans alésage traversant.

8. Toit déplaçable selon l'une quelconque des revendications 1 à 7, **caractérisé en ce qu'**une extrémité avant et une extrémité arrière (9a) de la ceinture sont fixées de manière semblable sur différentes pièces de tringlerie (7; 8) du toit (3).

9. Véhicule cabriolet (1) comprenant un toit déplaçable (3) selon l'une quelconque des revendications 1 à 8.
